# EUROPEAN PATENT SPECIFICATION

(11) **EP 0 831 514 B1**
(45) Date of publication and mention of the grant of the patent: **27.09.2000**
(21) Application number: 96941662.7
(22) Date of filing: 19.12.1996
(51) Int. Cl.: H01J 29/00, H04N 9/29

(54) **DEMAGNETIZATION AND GROUND CONNECTION DEVICE FOR COLOUR CATHODE RAY TUBES**
ENTMAGNETISIERUNGS- UND ERDVERBINDUNGSGERÄT FÜR EINE FARBKATHODENSTRAHLRÖHRE
DISPOSITIF DE DEMAGNETISATION ET DE CONNEXION A LA TERRE POUR TUBES A RAYONS CATHODIQUES COULEUR

(30) Priority: 11.01.1996 ES 9600049
(43) Date of publication of application: 25.03.1998
(73) Proprietor: Alarcia Arnaiz, Alfredo, 08014 Barcelona (ES); Alarcia Merida, Alicia, 08014 Barcelona (ES)
(72) Inventor: Alarcia Arnaiz, Alfredo, 08014 Barcelona (ES); Alarcia Merida, Alicia, 08014 Barcelona (ES)
(74) Representative: Duran Moya, Carlos
(86) International application number: ES9600243
(87) International publication number: WO9725734

(56) References cited:
- DE-A- 3 228 661
- DE-U- 7 517 755
- ES-A- 429 962
- US-A- 4 812 946
- PATENT ABSTRACTS OF JAPAN vol. 006, no. 132 (E-119), 17 July 1982 & JP 57 058 487 A (HITACHI LTD), 8 April 1982

## Description

The present invention relates to a demagnetising and earthing device for colour cathode ray tubes which brings features of novelty and inventive activity to the prior art.

At present, cathode ray tubes which are used for the visualisation of colour images have to be demagnetised periodically in order to eliminate undesired magnetic fields.

The demagnetisation is generally carried out when the apparatus is set in operation, by passing a decreasing alternating electric current (AC) through one or more coils surrounding the tube, in such a manner that the magnetic field generated passes through the components capable of being magnetised.

The coils comprise a circular winding of a diameter suitable for the size of the tube, with a specific number of turns of conductive wire, usually between 50 and 150, generally made of copper, to the ends of which the insulated electrical cables for supplying the coil are connected. The winding is covered with a flexible electrical insulating material to form an adaptable and flexible coil which is fitted on the cone of the cathode ray tube during the assembly of the latter, following the shape which is considered more effective, and it is secured by means of any desired type of securing device, such as clips, holders, separators or the like, to the metal part of the tube which is generally formed by the securing lugs and the anti-implosion band.

The earth of the tube, formed by the anti-implosion band and the graphite-treated exterior of the tube, has to be connected electrically to the earth of the electronic circuit supplying it in order to close the supply voltage electrical circuit of the cathode ray tube.

Earthing is effected by means of the braided conductor cable which is generally fastened to the securing lugs of the tube, tautness being maintained by means of helical springs which ensure that it is properly contacted electrically with the graphite layer.

The current system of demagnetising coils explained briefly above requires manual operation for mounting the coil on the rear portion of the cathode ray tube in order to ensure that the coil is fitted correctly. In addition, the characteristics of flexibility and ease of deformation of the coil do not ensure its completely regular and homogeneous operation from one case to another.

Japanese Patent application 55132888 discloses a demagnetisation coil removably attached to the outside of the funnel of the television set. However, said embodiment comprises the winding of the coil on a winding frame and the subsequent assembly of the coil on a holder in a removable form, the holder adopting the structure of two band-like elements fixed to a reinforce metalic fixture of the panel of the picture or the receiver cabinet, without disclosing a moulded and shaped unit comprising the coil and a flat spring for earthing.

The German patent 3228661 discloses the attachment of the demagnetisation coil by means of a unit attached to the television tube. However, said support for the coils is made out of three flat elements welded together and comprising the coil within a channel structure which has been made by pressing in one of the flat elements.

The present invention provides a new demagnetising and earthing device according to claim 1 which permits the mechanised and uniform mounting of the coil or coils on the cathode ray tube and also ensures invariable electrical operation.

Basically, the device forming the subject-matter of the present invention comprises a semi-rigid frame or two frames in the case of larger tubes, of the moulded type, the shape and dimensions of which fit the rear surface of the tube exactly. The frame accommodates the coil which may have been moulded in the plastics resin of the frame or which may have been wound or mounted subsequently in a housing provided for the purpose. Three possible methods may be used:
1) The coil is wound separately and is subsequently moulded inside the frame.
2) The coil is wound separately and is subsequently mounted in a housing provided in the frame and is insulated.
3) The coil is wound directly in a housing provided in the frame and is insulated.

Earthing is effected by means of flat springs or other suitable means which make electrical contact with the graphite. The electrical conductors which come from the coil and from the earth terminate in a connector which may be moulded or mounted subsequently.

The frame also has, in unitary manner, the wedges and grooves which enable it to be secured in a single operation to the lugs and anti-implosion band of the tube or to any other suitable site.

The new demagnetising device provides many advantages among which there may be mentioned in summarised manner:
- less time required for mounting the demagnetising device on the tube, when it is mounted by hand, and, in addition, the mounting operation can be mechanised;
- the positioning of the coil in a uniform manner, always in accordance with an optimum shape;
- the ability to incorporate other elements in the device, such as PTC temperature sensors, electrical capacitors, connectors which can be plugged into the terminals, etc;
- it exhibits characteristics of a rigid element, which enables it to be readily manipulated mechanically, giving rise to the possibility of automating the process for the manufacture of the coil;
- it enables the coil to be incorporated in the cathode ray tube in the final stage of the manufacture of the tube;
- it enables the coil to be readily connected to the tube, using readily mechanisable and economical fastening methods, such as pasting, or by means of adhesive elements in general.

In order to clarify the invention, some explanatory, but not limiting, drawings of the demagnetising device forming the subject-matter of the present invention are appended by way of example.
Figure 1 is a front view of a device for demagnetising a single coil according to the present invention;
Figure 2 is a view similar to Figure 1 in the case of a double-coil assembly;
Figure 3 is a sectional detail corresponding to the device of Figure 1;
Figure 4 is a side view of the device, showing diagrammatically its incorporation in a cathode ray tube of a television set;
Figure 5 is an elevation corresponding to the case of the double coil of Figure 2;
Figure 6 is a diagrammatic side view showing the positioning of the device in a double coil embodiment with a single frame;
Figure 7 is a front view of a double coil with a single frame in accordance with Figure 6; and
Figure 8 is a detail in section through the plane indicated.

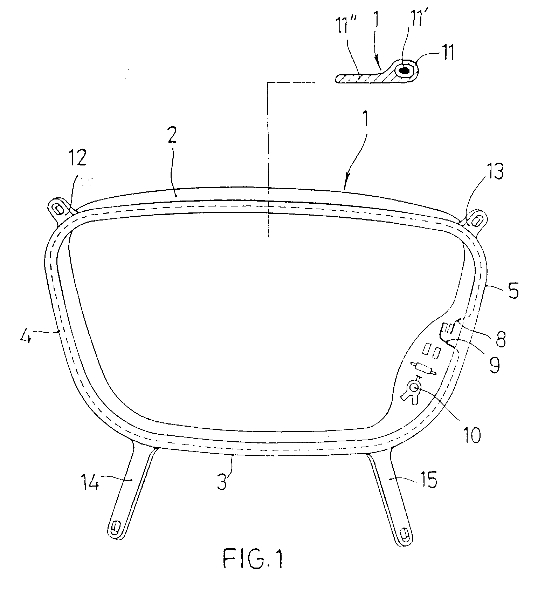

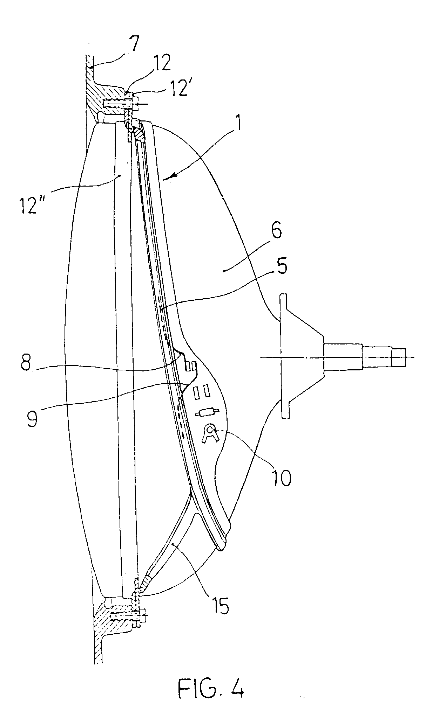

The present invention is characterised by the provision of a unitary semi-rigid element or frame, generally indicated by the numeral 1, which, in the case of a single coil, as represented in Figure 1, preferably, but not exclusively, has a rounded trapezoidal shape with longer upper and lower sides 2 and 3 and two other shorter sides 4 and 5. The device is produced by moulding from a suitable material, being intended to fit uniformly on the cathode ray tube, as shown diagrammatically in Figure 4 in which it can be seen that the cathode ray tube 6 receives, as a fixed element the frame 1, which is incorporated as one extra element in the assembly of the tube of the television set or other apparatus, in the surrounding fitting or casing 7.

It is a characteristic feature that the frame 1 contains the coil, the terminals of which have been shown with the numerals 8 and 9 and which has the necessary number of turns which are incorporated in the appropriate housing in the frame 1 or which can be wound directly inside said structure or are moulded in the structure, forming in each case a unitary assembly which is produced, optionally automatically, at the moment of incorporation in the cathode ray tube of the television set or similar apparatus.

Figure 1 shows diagrammatically the housing 11 for the coil 11', which is therefore well incorporated in a fixed manner in the semi-rigid frame 1 which preferably has a flange 11".

Earthing is effected preferably by means of a flat spring 10 as shown in Figure 1 although the exact form of said connection may vary widely.

In order to ensure that it is secured correctly, the frame 1 has suitable connecting areas, the Figure showing, by way of example, upper lugs 12 and 13 provided with end openings, and longer lower legs 14 and 15 likewise provided with end openings although, as will be appreciated, the specific embodiment of the securing elements may vary within wide limits. The frame can also be connected by means of resilient appendages in the grooves of the anti-implosion band.

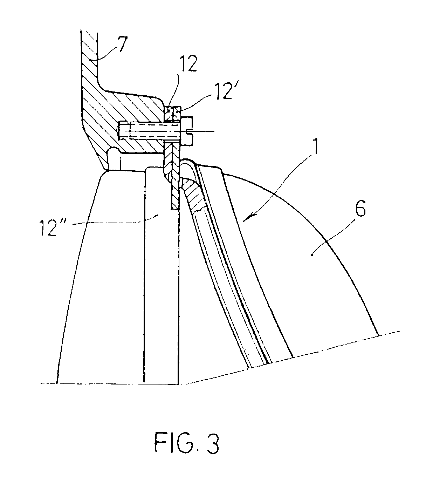

As shown in the detail of Figure 3, the appendages 12 are introduced via their grooves into the lugs 12' soldered to the anti-implosion frame 12" and are secured by means of screws.

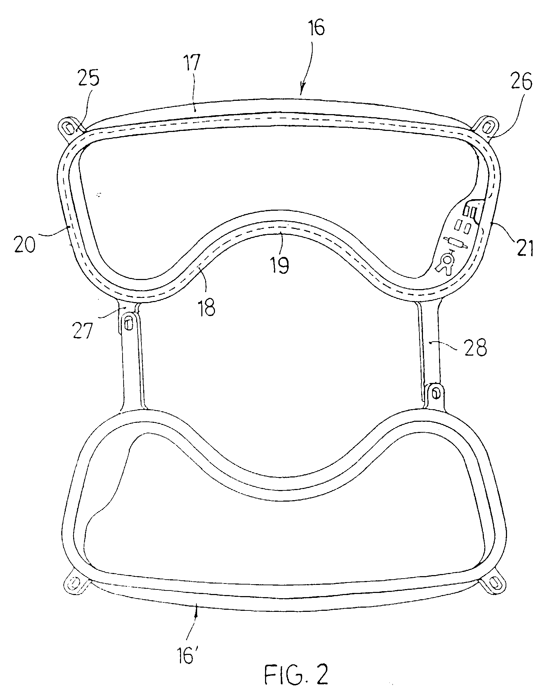

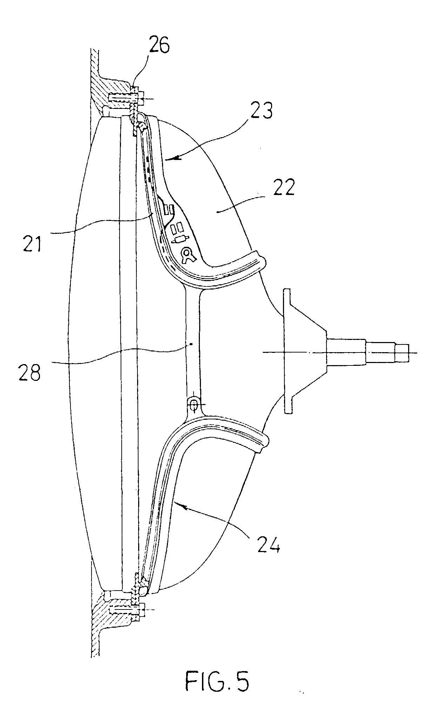

In the double-coil embodiment of the device, the device may be in the form of two frames like those indicated by the numerals 16 and 16' in Figure 2, the frame having an upper side 17 and a lower side 18 with an intermediate curved portion 19 and being completed by the shorter sides 20 and 21. The fitting of the double coils is effected in the manner indicated in Figure 5 in which two structures or coil-carrier elements for demagnetisation 23 and 24 are shown connected to a cathode ray tube 22 and occupy a portion of the upper half and a portion of the lower half, respectively, of the cathode ray tube.

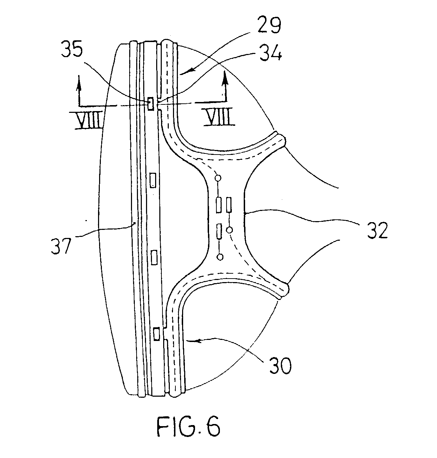

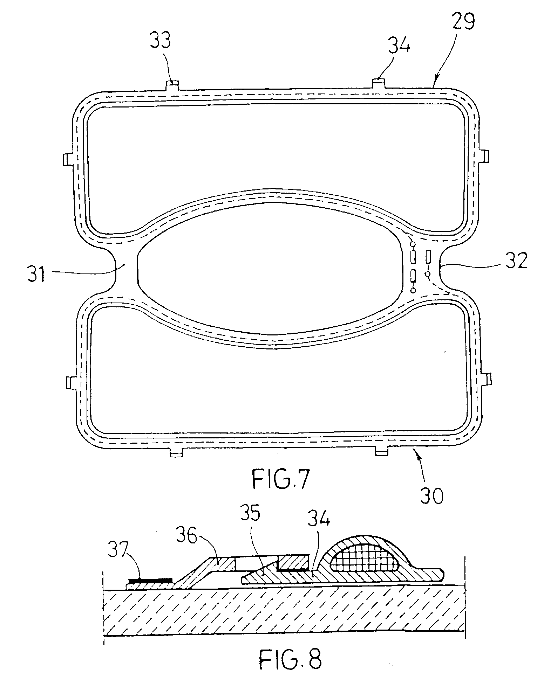

As shown in Figures 2 and 5, the structure 16 is in this case also provided with securing appendages 25 and 26 in the upper portion and 27 and 28 in the lower portion. In another version of the device for a double coil, as shown in Figures 6 and 7, the device has a single frame having an upper structure 29 and a lower structure 30 with separating intermediate crosspieces 31 and 32 which join the lower and upper portions, thus imparting rigidity to the assembly. The device can be secured, if desired, by means of a plurality of projecting appendages, such as 33, 34, .... which have the detailed structure shown in Figure 8 which illustrates an appendage 34 provided with an end claw 35 which has an inclined plane and which is suitable for introduction under pressure below the female fastening grooves 36 produced in the anti-implosion band 37.

Using all of the means which have been explained, it is possible to produce a demagnetising device for colour cathode ray tubes which achieves the advantages mentioned above, which are of great importance in the manufacture of colour television sets because the latter are products of which the very mechanised manufacture in large quantities makes it very desirable to introduce improvements which permit a reduction in costs and greater uniformity in the technical production of the television set, achieving, consistently and over the entire manufacturing series, the same optimum features in the demagnetisation assembly.

## Claims

1. Demagnetization and ground connection device for colour cathode ray tubes (6), characterised in that it comprises a semi-rigid moulded support (1) shaped to be adaptable to the rear portion of the cathode ray tube for colour visualisation and which carries the winding of the demagnetising coil (11') and also the earth connection (10) contacting the external part of the cathode ray tube.

2. Demagnetization and ground connection device for colour cathode ray tubes, according to Claim 1, characterised in that the earthing connection incorporated into the semi-rigid support for the coil comprises a flat spring.

3. Demagnetization and ground connection device for colour cathode ray tubes according to Claim 1, characterised in that the moulded support has a substantially trapezoidal structure which can be fitted to the rear portion of the cathode ray tube.

4. Demagnetization and ground connection device for colour cathode ray tubes according to Claim 1, characterised in that the frame carries the demagnetising coil separatedly wound and subsequently incorporated by moulding inside of the frame.

## Patentansprüche

1. Entmagnetisierungs- und Erdanschlußvorrichtung für Farb-Kathodenstrahlröhren (6), **dadurch gekennzeichnet**, daß sie einen halbstarren geformten Träger (1) aufweist, der zur Anpassung an den hinteren Teil der Kathodenstrahlröhre für die farbliche Sichtbarmachung geformt ist, und der die Wicklung der Entmagnetisierungsspule (11') und auch der Erdverbindung (10) trägt, die den äußeren Teil der Kathodenstrahlröhre kontaktiert.

2. Entmagnetisierungs- und Erdanschlußvorrichtung für Farb-Kathodenstrahlröhren nach Anspruch 1, **dadurch gekennzeichnet**, daß der in den halbstarren Träger für die Spule inkorporierte Erdanschluß eine Blattfeder aufweist.

3. Entmagnetisierungs- und Erdanschlußvorrichtung für Farb-Kathodenstrahlröhren nach Anspruch 1, **dadurch gekennzeichnet**, daß der geformte Träger eine im wesentlichen trapezförmige Struktur hat, die sich auf den hinteren Teil der Kathodenstrahlröhre setzen läßt.

4. Entmagnetisierungs- und Erdanschlußvorrichtung für Farb-Kathodenstrahlröhren nach Anspruch 1, **dadurch gekennzeichnet**, daß der Rahmen die Entmagnetisierungsspule trägt, die separat gewickelt und dann durch Formen in das Innere des Rahmens inkorporiert ist.

## Revendications

1. Dispositif de démagnétisation et de connexion à la masse pour des tubes à rayons cathodiques couleur (6), caractérisé en ce qu'il comprend un support moulé semi-rigide (1) formé pour être adaptable à la partie arrière du tube à rayons cathodiques pour une visualisation en couleur et qui porte l'enroulement de la bobine de démagnétisation (11') et aussi la connexion à la masse (10) en contact avec la partie externe du tube à rayons cathodiques.

2. Dispositif de démagnétisation et de connexion à la masse pour des tubes à rayons cathodiques couleur, selon la revendication 1, caractérisé en ce que la connexion de mise à la masse incorporée dans le support semi-rigide pour la bobine comprend un ressort plat.

3. Dispositif de démagnétisation et de connexion à la masse pour des tubes à rayons cathodiques couleur selon la revendication 1, caractérisé en ce que le support moulé a une structure substantiellement trapézoïdale qui peut être ajustée à la partie arrière du tube à rayons cathodiques.

4. Dispositif de démagnétisation et de connexion à la masse pour des tubes à rayons cathodiques couleur selon la revendication 1, caractérisé en ce que le cadre porte la bobine de démagnétisation enroulée séparément et par la suite incorporée par moulage à l'intérieur du cadre.
